# EUROPÄISCHE PATENTSCHRIFT

(11) **EP 0 620 070 B1**
(45) Veröffentlichungstag und Bekanntmachung des Hinweises auf die Patenterteilung: **12.11.1997**
(21) Anmeldenummer: 93106021.4
(22) Anmeldetag: 14.04.1993
(51) Int. Cl.: B23C 5/10, B23C 5/22

(54) **Fräser**
Milling cutter
Fraise

(43) Veröffentlichungstag der Anmeldung: 19.10.1994
(73) Patentinhaber: STELLRAM GmbH, D-63150 Heusenstamm (DE)
(72) Erfinder: Pividori, Gianfranco, I-25100 Brescia (IT)
(74) Vertreter: Köhler, Günter, Dipl.-Ing.

(56) Entgegenhaltungen:
- EP-A- 0 431 746
- DE-A- 2 848 228
- DE-A- 3 624 861
- GB-A- 2 079 656
- PATENT ABSTRACTS OF JAPAN vol. 7, no. 12 (M-186)(1157) 19. Januar 1983

## Beschreibung

Die Erfindung bezieht sich auf einen Fräser gemäß Oberbegriff des Patentanspruches mit auf dem Umfang verteilten und in verschiedenen Radialebenen angeordneten mehrkantigen Schneidplatten.

Bei einem im Handel erhältlichen Kugelkopffräser dieser Art überlappen sich die Konturen der Schneidplatten in der axialen Bearbeitungsebene axial, während sich die Konturen wenigstens der in den in axialer Richtung vorderen benachbarten Axialebenen liegenden Schneidplatten auch radial in der axialen Bearbeitungsebene überlappen. Die Schneidkanten sind jedoch gewölbt, wobei ihr Krümmungsradius weitgehend der gewünschten Kontur des Werkstücks angepaßt ist. Die Schneidkanten stehen daher bei der Bearbeitung eines Werkstücks auf einem verhältnismäßig großen Teil ihrer Länge mit dem Werkstück in Eingriff. Dies hat zur Folge, daß sich verhältnismäßig breite Späne ergeben und demzufolge die Belastung der Schneidkanten hoch und die Standzeit der Schneidplatte bei geringer Schnittleistung hoch ist. Sodann sind für Werkstückkonturen mit unterschiedlichen Krümmungsradien entsprechende Krümmungsradien der Schneidkanten zu wählen.

Bei einem bekannten im Handel erhältlichen Walzenstirnfräser der eingangs genannten Art mit vierkantigen Wendeschneidplatten überlappen sich die Konturen der Schneidplatten in der axialen Bearbeitungsebene nur axial. Sie stehen daher über ihre gesamte Schneidkantenlänge mit dem Werkstück in Eingriff. Die Folge sind auch hier eine hohe Belastung der Schneidkanten mit entsprechend geringer Standzeit und Schnittleistung.

Aus den den nächstkommenden Stand der Technik beschreibenden Patent Abstracts of Japan, vol. 7, No. 12 (M-186)(1157) 19. Januar 19983 und JP-A-57 168 804 ist ein Kugelkopffräser bekannt, der auf dem Umfang verteilte und in verschiedenen Radialebenen angeordnete mehrkantige Schneidplatten hat, deren Konturen sich in der axialen Bearbeitungsebene axial überlappen, wobei sich die Konturen wenigstens der in den in axialer Richtung vorderen benachbarten Radialebenen liegenden Schneidplatten in der axialen Bearbeitungsebene radial überlappen und die Schneidkanten der Schneidplatten zwischen deren Ecken geradlinig sind. Ein solcher Fräser hat eine hohe Schnittleistung und ist besonders zum Schruppen geeignet. Für die verschiedensten Werkstückkonturen können die gleichen Schneidplatten, insbesondere Wendeschneidplatten, verwendet werden.

Der Erfindung liegt die Aufgabe zugrunde, einen Fräser dieser Art anzugeben, bei dem wenigstens einige Schneidplatten eine höhere Standzeit aufweisen.

Erfindungsgemäß ist diese Aufgabe dadurch gelöst, daß sich die in Bearbeitungseingriff gelangenden Schneidkanten der in den in axialer Richtung vorderen benachbarten Radialebenen liegenden Schneidplatten in der axialen Bearbeitungsebene mehrfach überschneiden. Dies hat den Vorteil, daß sich bei diesen Schneidplatten, bezogen auf die Gesamtlänge der Schneidkanten, schmalere und bei jeder Schneidplatte wenigstens zwei Späne ergeben. Diese Schneidkanten unterliegen daher einer geringeren Belastung und haben demzufolge eine höhere Standzeit bzw. Lebensdauer.

Die Erfindung wird nachstehend anhand der Zeichnung bevorzugter Ausführungsbeispiele näher beschrieben. Es zeigen:
Fig. 1 eine Seitenansicht eines erfindungsgemäßen Fräsers,
Fig. 2 eine Vorderansicht des Fräsers nach Fig. 1,
Fig. 3 eine perspektivische Ansicht des Fräsers nach Fig. 1,
Fig. 4 eine schematische Darstellung der in die gleiche axiale Bearbeitungsebene gedrehten Schneidplatten des Fräsers nach Fig. 1 und einer mit dem Fräser nach Fig. 1 gefrästen Werkstückkontur,
Fig. 5 ein zweites Ausführungsbeispiel eines erfindungsgemäßen Fräsers in Seitenansicht,
Fig. 6 die Anordnung der Schneidplatten des Fräsers nach Fig. 5 in einer Vorderansicht des Fräsers nach Fig. 5 ohne den Fräserkörper,
Fig. 7 eine perspektivische Ansicht des Fräsers nach Fig. 5 und
Fig. 8 eine schematische Darstellung der in die gleiche axiale Bearbeitungsebene gedrehten Schneidplatten des Fräsers nach Fig. 5 und einer mit dem Fräser nach Fig. 5 gefrästen Werkstückkontur.

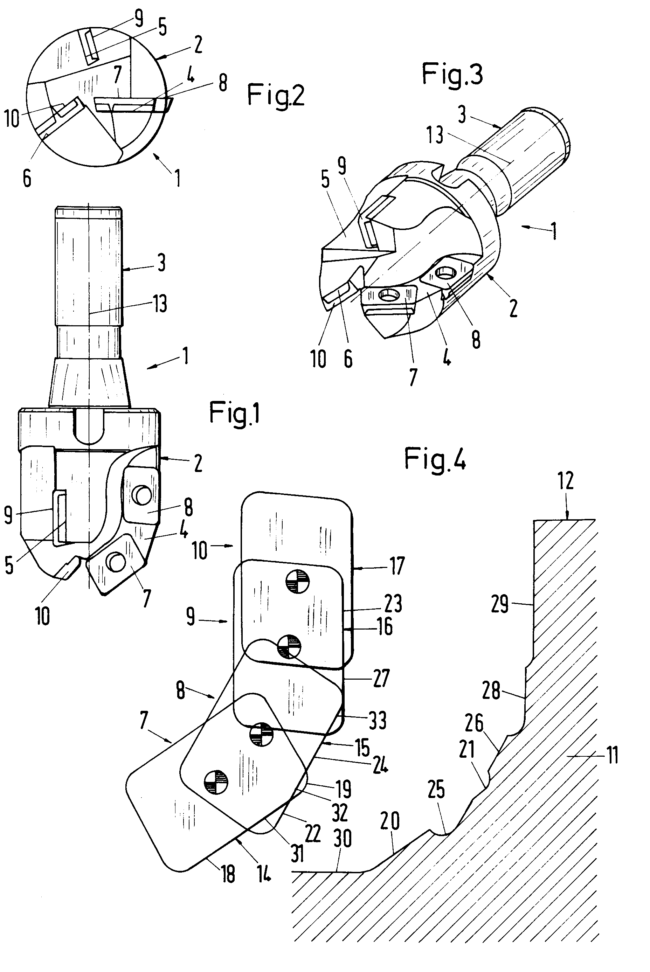

Der Fräser nach den Fig. 1 bis 4 ist ein Kugelkopffräser mit axialer und radialer Vorschubrichtung zur Schruppbearbeitung. Er hat einen Körper 1 mit einem Schneidenträger 2 und einem Schaft 3. Der Schneidenträger 2 und der Schaft 3 sind miteinander verschraubt. Auf dem Umfang des Schneidenträgers 2 sind in axialen Spannuten 4, 5 und 6 mehrkantige Schneidplatten 7 bis 10, hier vierkantige, langgestreckte Wendeschneidplatten, mittels nicht dargestellter Klemmschrauben befestigt, die durch zentrische Löcher in den Schneidplatten 7 bis 10 hindurchgeführt sind. Während in der Spannut 4 die beiden Schneidplatten 7 und 8 angeordnet sind, ist in der Spannut 5 nur die Schneidplatte 9 und in der Spannut 6 nur die Schneidplatte 10 angeordnet. Alle Schneidplatten 9 bis 10 liegen in verschiedenen radialen Ebenen des Fräsers.

In der schematischen Darstellung nach Fig. 4 sind die Schneidplatten 7 bis 10 alle in die gleiche axiale Bearbeitungsebene gedreht dargestellt, die mit der in Fig. 4 dargestellten Schnittebene 11 des Werkstücks 12 zusammenfällt. Diese Bearbeitungsebene wird bei der Drehung des Fräsers um seine mittlere die Drehachse 13 bildende Längsachse nacheinander von dem Schneidplattenpaar 7, 8 und den Schneidplatten 9 und 10 durchlaufen. Wie Fig. 4 zeigt, überlappen sich die Konturen der Schneidplatten 7 bis 10 in der axialen Bearbeitungsebene nicht nur axial, sondern auch radial. Zur Bearbeitung des Werkstücks 12 wird der Fräser zunächst axial und dann radial verfahren, wobei sich die in Fig. 4 linke Kontur des Werkstücks 12 ergibt. Wie Fig. 4 weiter zeigt, überschneiden sich die Schneidkanten 14 und 15 der beiden Schneidplatten 7 und 8, die in den in axialer Richtung vordersten benachbarten Radialebenen liegen, in der Bearbeitungsebene mehrfach, wobei die außerhalb der Kontur der Schneidplatte 8 liegenden Schneidkantenabschnitte 18 und 19 der Schneidplatte 7 jeweils die Abschnitte 20 und 21 der Werkstückfläche, die außerhalb der Konturen der Schneidplatten 7 und 9 liegenden Schneidkantenabschnitte 22 und 24 jeweils die Abschnitte 25 und 26 der Werkstückfläche, der außerhalb der Konturen der Schneidplatten 8 und 10 liegende Schneidkantenabschnitt 27 der Schneidplatte 9 den Abschnitt 28 der Werkstückfläche und die Schneidkante 17 den Abschnitt 29 der Werkstückfläche bearbeiten. Die Schneidkanten 14 und 15 der Schneidplatten 7 und 8 stehen im Winkel zueinander und zu den Schneidkanten 16 und 17, während die Schneidkanten 16 und 17 parallel verlaufen. Die Ecken der Schneidplatten bilden abgerundete Schneidkantenabschnitte, wobei die in axialer Vorschubrichtung vorderste Ecke der Schneidplatte 7 den Abschnitt 30 der Werkstückfläche bearbeitet. Die Schneidkantenabschnitte 18, 19 und 22, 24 erzeugen jeweils getrennte Späne, während der innerhalb der Kontur der Schneidplatte 8 liegende Schneidkantenabschnitt 31 der Schneidplatte 7, der innerhalb der Kontur der Schneidplatte 7 liegende Schneidkantenabschnitt 32 der Schneidplatte 8, der innerhalb der Kontur der Schneidplatte 9 liegende Schneidkantenabschnitt 33 der Schneidplatte 8 und der innerhalb der Kontur der Schneidplatte 10 liegende Schneidkantenabschnitt 23 der Schneidplatte 9 nicht mit dem Werkstück 12 in Bearbeitungseingriff kommen. Auch die Schneidkante 17 der Schneidplatte 10 kommt im dargestellten Ausführungsbeispiel nur mit einem Teil ihrer Länge, entsprechend dem axialen Vorschubweg, mit dem Werkstück 12 in Bearbeitungseingriff. Zumindest die Schneidkanten 14, 15 und 16 sind daher nur geringfügig belastet, und die von den Schneidplatten 7 bis 10 erzeugten schmalen Späne lassen sich leicht abführen. Zwar ist die gefräste Kontur des Werkstücks 12 nur annähernd kreisförmig, doch läßt sie sich in einem einzigen Schrupp-Arbeitsgang mit hoher Schnitt- und Vorschubgeschwindigkeit, d.h. hoher Schnittleistung, bei geringer Maschinenantriebsleistung bearbeiten, ohne die Schneidplatten 7 bis 10 an den Schneidkanten 14 bis 17 hoch zu belasten. Die Schneidplatten bzw. ihre Schneidkanten haben daher eine hohe Standzeit. Die Feinbearbeitung oder das Schlichten kann dann in einem weiteren Arbeitsgang, sei es mit dem gleichen Fräser oder einem anderen einfacheren Fräser, durchgeführt werden.

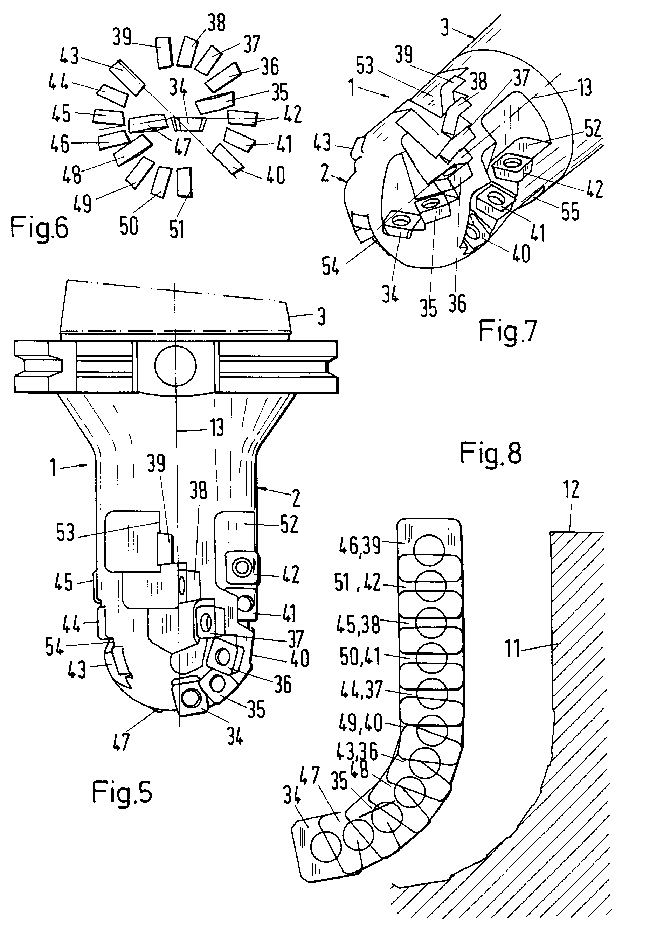

Der Fräser nach den Fig. 5 bis 8 ist ebenfalls ein Kugelkopffräser und prinzipiell ebenso ausgebildet wie der Fräser nach den Fig. 1 bis 4. Ein wesentlicher Unterschied besteht lediglich darin, daß eine größere Anzahl von quadratischen (kürzeren) Schneidplatten 34 bis 51 vorgesehen ist, die auf vier abgestufte Spannuten 52 bis 55 verteilt sind, wobei die Spannuten 52 bis 54 in grober Annäherung schraubenlinienförmig teilweise um die Drehachse 13 herumlaufen. In der Spannut 52 sind die Schneidplatten 40 bis 42, in der Spannut 53 die Schneidplatten 34 bis 39, in der Spannut 54 die Schneidplatten 43 bis 46 und in der Spannut 55 die Schneidplatten 47 bis 51 angeordnet. Wie in Fig. 8 angedeutet ist, sind die Schneidplattenpaare 36, 43; 40, 49; 37, 44; 41, 50; 38, 45; 42, 51 und 39, 46 jeweils auf dem gleichen Umkreis um die Drehachse 13 in der gleichen Radialebene und unter gleichen Winkeln zur Drehachse 13 in der axialen Bearbeitungsebene (11) angeordnet. In der Darstellung nach Fig. 8 liegen die erwähnten Schneidplattenpaare daher übereinander. Aufgrund der größeren Anzahl pro axialer Längeneinheit und geringeren axialen Abstände der Schneidplatten 34 bis 51 als bei dem Beispiel nach den Fig. 1 bis 4 ergibt sich eine genauere Annäherung des gekrümmten Bereichs der rechts in Fig. 8 dargestellten Kontur der gefrästen Werkstückfläche an eine Kreisform.

## Patentansprüche

1. Kugelkopffräser mit auf dem Umfang verteilten und in verschiedenen Radialebenen angeordneten mehrkantigen Schneidplatten (7 - 10; 34 - 51), deren Konturen sich in der axialen Bearbeitungsebene axial überlappen, wobei sich die Konturen wenigstens der in den in axialer Richtung vorderen benachbarten Radialebenen liegenden Schneidplatten (7 - 10; 34 - 37; 43, 44, 47 - 49) in der axialen Bearbeitungsebene radial überlappen und die Schneidkanten der Schneidplatten (7 - 10; 34 - 51) zwischen deren Ecken geradlinig sind, **dadurch gekennzeichnet,** daß sich die in Bearbeitungseingriff gelangenden Schneidkanten der in den in axialer Richtung vorderen benachbarten Radialebenen liegenden Schneidplatten (7, 8; 35, 36, 40, 43, 47, 49) in der axialen Bearbeitungsebene mehrfach überlappen.

## Claims

1. Spherical head milling tool with multi-edged cutting plates (7 to 10; 34 to 51) which are arranged distributed at the circumference and in different planes and the profiles of which axially overlap in the axial processing plane, wherein the profiles of at least the cutting plates (7 to 10; 34 to 37; 43, 44, 47 to 49) lying in the adjacent radial planes at the front in axial direction radially overlap in the axial processing plane and the cutting edges of the cutting plates (7 to 10; 34 to 51) are rectilinear between the corners thereof, characterised thereby that the cutting edges, which come into processing action, of the cutting plates (7, 8; 35, 36, 40, 43, 47, 49) lying in the adjacent radial planes at the front in axial direction overlap a plurality of times in the axial processing plane.

## Revendications

1. Fraise à tête circulaire comportant des plaquettes de coupe polygonales (7 à 10; 34 à 51) réparties sur la périphérie et agencées dans divers plans radiaux, dont les contours se chevauchent axialement dans le plan d'usinage axial, les contours au moins des plaquettes de coupe (7 à 10; 34 à 37; 43, 44, 47 à 49) se trouvant dans les plans radiaux voisins les plus en avant dans la direction axiale se chevauchant radialement dans le plan de travail axial et les arêtes de coupe des plaquettes de coupe (7 à 10; 34 à 51) étant rectilignes entre leurs coins, caractérisée en ce que les arêtes de coupe, arrivant en contact d'usinage, des plaquettes de coupe (7, 8; 35, 36, 40,43, 47, 49), qui se trouvent dans les plans radiaux voisins les plus en avant dans la direction axiale, se chevauchent à plusieurs reprises dans le plan d'usinage axial.
